# FASCICULE DE BREVET EUROPEEN

(11) **EP 2 705 910 B1**
(45) Date de publication et mention de la délivrance du brevet: **23.08.2017**
(21) Numéro de dépôt: 13306236.4
(22) Date de dépôt: 10.09.2013
(51) Int. Cl.: B09B 3/00, B03B 9/06, B09B 5/00, H01J 9/52

(54) **Procédé de recyclage d'écrans plats à cristaux liquides**
Recycling-Verfahren für Flüssigkristallflachbildschirme
Method for recycling flat liquid crystal screens

(30) Priorité: 10.09.2012 FR 1258456
(43) Date de publication de la demande: 12.03.2014
(73) Titulaire: Envie 2E, 59810 Lesquin (FR)
(72) Inventeur: Doisy, Jean-Yves, 59184 Sainghin en Weppes (FR); Louage, Christophe, 59780 Camphin en Pevele (FR)
(74) Mandataire: Matkowska, Franck

(56) Documents cités:
- DE-A1-102009 020 751
- JP-A- 2001 305 502

## Description

### Domaine technique

La présente invention concerne le domaine technique du recyclage d'écrans plats à cristaux liquides, de type écrans de télévision ou écrans d'ordinateur, plus communément appelés écrans LCD, et comportant une dalle d'affichage à cristaux liquides. Dans le cadre d'invention, les écrans plats à cristaux liquides comportent des moyens d'éclairage de la dalle qui peuvent varier en fonction du type d'écran plat à cristaux liquides, tels que par exemple des tubes d'éclairage, notamment des tubes d'éclairage à vapeur de mercure, ou des diodes électroluminescentes (LED).

### Art antérieur

Les écrans plat à cristaux liquides, communément appelés écrans LCD, fonctionnent tous sur le même principe de diffusion d'une source lumineuse au travers d'un filtre coloré masqué par des cristaux liquides. Il existe néanmoins deux grandes familles d'écrans plats à cristaux liquides : la famille des écrans de télévision et la famille des écrans d'ordinateur.

Un écran plat LCD de télévision comporte de manière usuelle une dalle d'affichage qui comprend deux verres dont la face interne est enduite d'oxyde d'indium-étain (ITO) et une couche de cristaux liquides prise en sandwich entre les deux verres. Cette dalle d'affichage LCD est enchâssée dans un châssis, et un écran plat LCD de télévision comporte plusieurs couches de films plastiques diffuseurs de lumière, qui sont positionnées entre la face arrière de la dalle LCD et le fond du châssis, et des tubes d'éclairage à vapeur de mercure. Les tubes d'éclairage à vapeur de mercure sont disposés régulièrement entre le fond du châssis et les couches de films plastiques, et permettent un rétro-éclairage de la dalle LCD à travers lesdites couches de films plastiques.

Un écran plat LCD d'ordinateur comporte de manière usuelle une dalle d'affichage à cristaux liquides du même type que celle des écrans plats LCD de télévision, une plaque de diffusion transparente, en matériau thermoplastique, et le plus souvent en polyméthacrylate de méthyle (PMMA), qui est positionnée entre la face arrière de la dalle et le fond du châssis, et des tubes d'éclairage à vapeur de mercure. A la différence d'un écran plat LCD de télévision, dans un écran plat LCD d'ordinateur les tubes d'éclairage à vapeur de mercure sont disposés de part et d'autre de la plaque de diffusion, à proximité immédiate de deux bords opposés de la plaque de diffusion, de telle sorte que la lumière produite par les tubes d'éclairage est diffusée à travers la plaque. La dalle LCD est ainsi retro-éclairée de manière homogène au moyen de la plaque de diffusion combinée avec les tubes d'éclairage à vapeur de mercure.

Plus récemment, on a également proposé des écrans plats LCD, notamment des écrans plats LCD de télévision, dits LCD-LED dans lesquels les tubes d'éclairage à vapeur de mercure sont remplacés par des diodes électroluminescentes (LED)

L'oxyde d'indium-étain (ITO) est un composant dont les réserves mondiales sont menacées d'épuisement. Il est donc primordial à l'avenir de trouver des solutions techniques de recyclage permettant de récupérer l'oxyde d'indium-étain (ITO) utilisé dans les écrans plats LCD.

La demande de brevet japonais JP2001305502 propose une solution de recyclage d'un écran plat LCD dans laquelle, après découpe et ouverture de la dalle de l'écran, on traite les deux verres de la dalle de manière dans un premier temps à récupérer les cristaux liquides par solubilisation, notamment au moyen d'acétone. Cette demande de brevet japonais JP2001305502 enseigne également de récupérer mécaniquement l'indium. Dans cette demande de brevet japonais JP2001305502, d'une part l'oxyde d'indium-étain (ITO) n'est pas mentionné, et d'autre part la récupération de l'indium est effectuée de manière mécanique en raclant la surface des verres au moyen d'un système mécanique, tel que celui illustré sur la figure 6 de la demande de brevet japonais JP2001305502.

Les tubes d'éclairage à vapeur de mercure comportent un tube en verre contenant un gaz de remplissage comprenant un gaz rare inerte et du mercure, et des électrodes de décharge permettant l'ionisation du gaz de remplissage. En cas de rupture du tube de verre, les vapeurs de mercure qui sont dégagées sont extrêmement nocives et susceptibles de provoquer des lésions cérébrales, rénales, cardiaques et pulmonaires. Les tubes d'éclairage à vapeur de mercure constituent donc une source de pollution nocive, qui complique les opérations de recyclage des écrans plats LCD.

### Objectif de l'invention

Un objectif de l'invention est de proposer une nouvelle solution technique de recyclage d'écrans plats LCD.

### Résumé de l'invention

L'invention a ainsi pour objet un procédé de recyclage d'un écran plat à cristaux liquides, tel que défini dans la revendication 1.

Dans la solution de l'invention et à la différence de la solution décrite dans la demande de brevet japonais JP2001305502 susvisée, la récupération des cristaux liquides et de l'oxyde d'indium-étain est avantageusement réalisée de manière efficace, sans mise en oeuvre de moyens mécaniques pour racler mécaniquement la surface des verres.

Plus particulièrement, mais de manière facultative selon l'invention, le procédé de recyclage de l'invention peut comporter les caractéristiques techniques additionnelles et optionnelles ci-après, prises isolément ou en combinaison les unes avec les autres :
- le lavage des verres est réalisé en trempant chaque verre successivement dans au moins deux bains: au moins un premier bain contenant le premier liquide, et au moins un deuxième bain contenant le deuxième liquide.
- le premier bain et/ou le deuxième bain est mis en vibration par des ultrasons.
- le premier liquide contient un solvant organique ou de l'alcool.
- le premier liquide contient de l'acétone.
- le deuxième liquide est une solution acide.
- le deuxième liquide contient de l'acide nitrique.
- la découpe de la dalle à cristaux liquides est effectuée au moyen d'un laser.
- la découpe de la dalle à cristaux liquides est réalisée suivant un contour de découpe fermé réalisé dans la partie centrale de la dalle qui n'est pas couverte par le châssis.
- l'écran plat à cristaux liquides comporte des tubes d'éclairage à vapeur de mercure, et la découpe de la dalle à cristaux liquides est réalisée en préservant l'intégrité des tubes à vapeur de mercure.
- l'écran plat à cristaux liquides comportant en outre une ou plusieurs couches de matériau plastique positionnées entre la face arrière de la dalle et le châssis, pour réaliser la découpe, on positionne la face avant de la dalle à cristaux liquides de l'écran plat sous une tête de découpe par laser, on réalise une première étape de découpe de la dalle au moyen d'un faisceau laser suivant un contour de découpe fermé réalisé dans la partie centrale de la dalle qui n'est pas couverte par le châssis, et de telle sorte qu'au moins une des couches de matériau plastique n'est pas découpée par le laser, puis on retire la partie centrale découpée de la dalle à cristaux liquides.
- une fois la partie centrale de la dalle à cristaux liquides retirée, on réalise une deuxième étape de découpe, au moyen d'un faisceau laser, de la ou des couches de matériau plastique, qui n'ont pas été découpées au cours de la première étape de découpe par laser de la dalle, tout en préservant l'intégrité des tubes à vapeur de mercure.
- pendant la deuxième étape de découpe, la puissance du faisceau laser est comprise entre 490W et 610W et la vitesse de découpe est comprise entre 47mm/s et 93mm/s, ou entre 13mm/s et 27mm/s.
- l'énergie délivrée par le faisceau laser de découpe au cours de la deuxième étape de découpe est inférieure à l'énergie délivrée par le faisceau laser de découpe au cours de la première étape de découpe.
- les tubes à vapeur de mercure sont positionnés en face arrière de la dalle.
- l'écran comporte un ou plusieurs films plastiques superposés en guise de couches de matériau plastique.
- l'écran comporte une plaque de diffusion en guise de couche de matériau plastique, et les tubes à vapeur de mercure sont positionnés de part et d'autre de la plaque de diffusion, à proximité immédiate de deux bords opposés de la plaque de diffusion.
- la plaque de diffusion est en PMMA.
- la longueur d'onde du faisceau laser est comprise entre 980nm et 11600nm.
- le diamètre du faisceau laser à la sortie de la tête de découpe est compris entre environ 0,4mm et 0,7mm, le waist du faisceau laser est compris entre environ 11 mm et 15 mm, et la distance de découpe est comprise entre environ 185mm et 210mm.
- pendant la première étape de découpe de la dalle LCD, la puissance du faisceau laser est comprise entre 300W et 900W, et la vitesse de découpe est comprise entre 13mm/s et 27 mm/s.
- on recycle le châssis contenant les tubes à vapeur de mercure intacts dans une deuxième filière de recyclage distincte de la première filière de recyclage.
- dans la deuxième filière de recyclage, on positionne, dans une enceinte hermétique, le châssis contenant les tubes à vapeur de mercure, après avoir le cas échéant retiré la ou les couches de matériau plastique qui ont été préalablement découpées, on détruit in situ dans l'enceinte les tubes à vapeur de mercure en les brisant, et on aspire les vapeurs de mercure en dehors de l'enceinte.

### Brève description des figures

D'autre caractéristiques et avantages de l'invention apparaîtront plus clairement à la lecture de la description détaillée d'un exemple de procédé de recyclage d'écrans plats LCD, laquelle description détaillée est faite à titre d'exemple non limitatif et non exhaustif de l'invention et en référence aux dessins annexés sur lesquels :
- la figure 1 est une vue de face d'un exemple d'écran plat LCD, de type écran de télévision ou écran d'ordinateur ;
- la figure 2 est une vue en coupe transversale schématique de l'écran de la figure 1 dans le plan de coupe II-II ;
- la figure 3 est une vue en coupe transversale schématique de l'écran de la figure 2, après première découpe laser et retrait de la dalle d'affichage LCD ;
- la figure 4 est une vue en coupe transversale schématique de l'écran de la figure 3, après deuxième découpe laser ;
- la figure 5 est un exemple d'équipement de découpe d'un écran plat LCD mettant en oeuvre un bras robotisé et un laser de découpe ;
- la figure 6 est une vue en coupe transversale schématique d'un écran plat LCD, de type écran d'ordinateur ;
- la figure 7 est une vue en coupe transversale schématique de l'écran de la figure 6, après première découpe laser et retrait de la dalle d'affichage LCD ;
- la figure 8 est une vue en coupe transversale schématique de l'écran de la figure 7, après deuxième découpe laser
- la figure 9 est un synoptique synthétisant les principales étapes d'un procédé de recyclage conforme à l'invention.

### Description détaillée

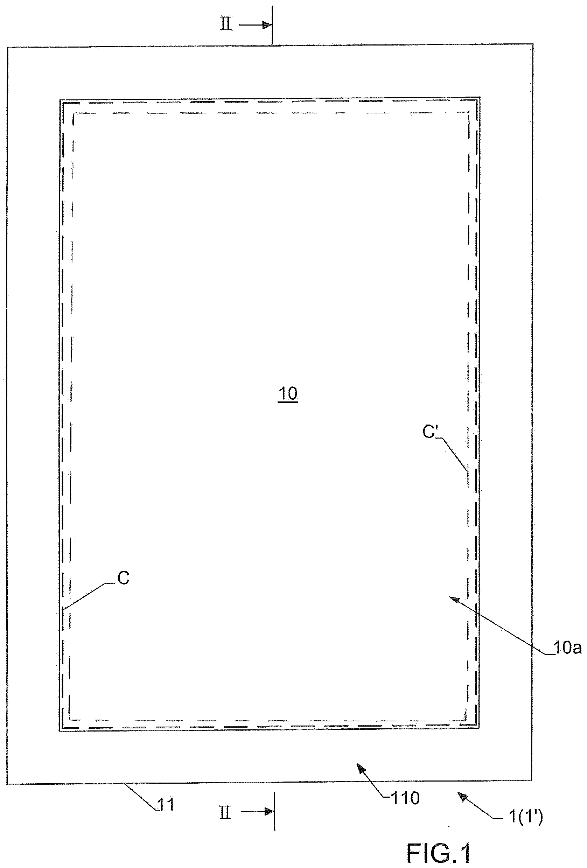

### Ecran plat LCD - figures 1, 2 et 6

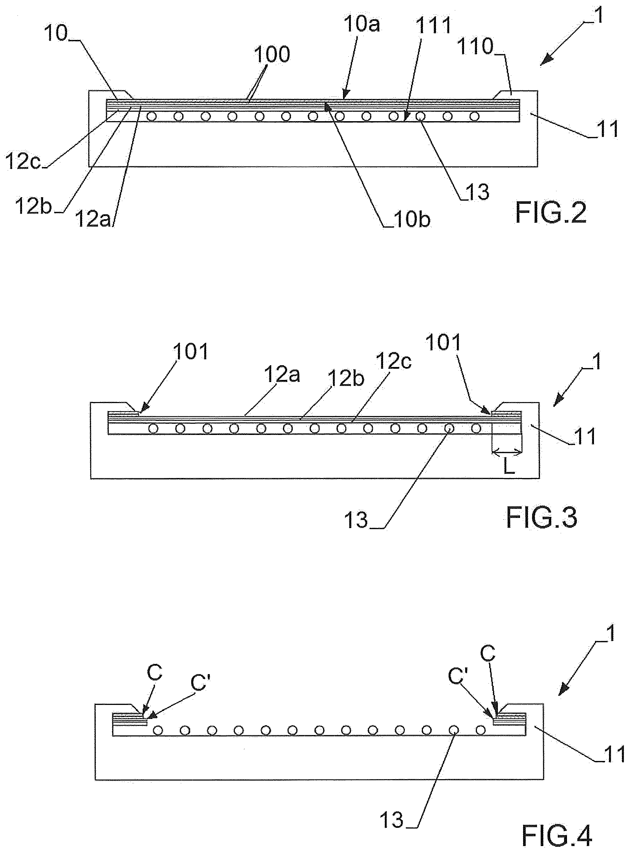

On a représenté de manière schématique sur les figures 1 et 2 un exemple d'écran plat 1 à cristaux liquides, de type écran de télévision, comportant une dalle d'affichage 10 à cristaux liquides, désignée également par la suite dalle LCD. Cette dalle LCD 10 comporte de manière usuelle deux plaques de verre 100 enserrant des cristaux liquides, les faces internes des deux plaques de verre 100 en vis-à-vis l'une de l'autre étant en outre enduites d'oxyde d'indium-étain (ITO). La structure de la dalle LCD 10 est connue en soi et a été représentée de manière schématique et simplifiée sur les figures annexées.

Cette dalle LCD 10 est montée et fixée dans un châssis 11 qui peut être en une ou plusieurs parties, et qui est par exemple en plastique ou en métal.

Cette dalle LCD 10 est recouverte en face avant 10a, et sur toute sa périphérie, par un bord périphérique 110 du châssis 11. L'écran 1 comporte en outre entre le fond 111 du châssis 11 et la face arrière 10b de la dalle LCD 10 des tubes d'éclairage à vapeur de mercure 13 et plusieurs films plastiques superposés 12a, 12b, 12c permettant notamment de diffuser la lumière produite par les tubes d'éclairage à vapeur de mercure 13. Dans la variante particulière de réalisation de la figure 2, ces films plastiques sont au nombre de trois. Dans une autre variante de réalisation, le nombre de film plastiques diffuseurs pourrait être différent. Ces films plastiques 12a, 12b, 12c présentent des épaisseurs, qui peuvent être différentes, et qui en pratique peuvent varier par exemple du dixième de millimètre au millimètre. Ces films plastiques 12a, 12b,12c peuvent être de type monocouche ou multicouche et peuvent être constitués de matériaux plastiques divers, tels que par exemple du PET, PC (Polycarbonate), PMMA. Plus particulièrement ces films plastiques 12a, 12b,12c peuvent par exemple être de type monocouche en PET ou PMMA, ou être des films bicouches PC/PET, PMMA/PET, PMMA/PC.

Ces films 12a, 12b, 12c forment ainsi plusieurs couches fines de matériau plastique interposées entre la face arrière 10b de la dalle LCD 10 et les tubes d'éclairage à vapeur de mercure 13.

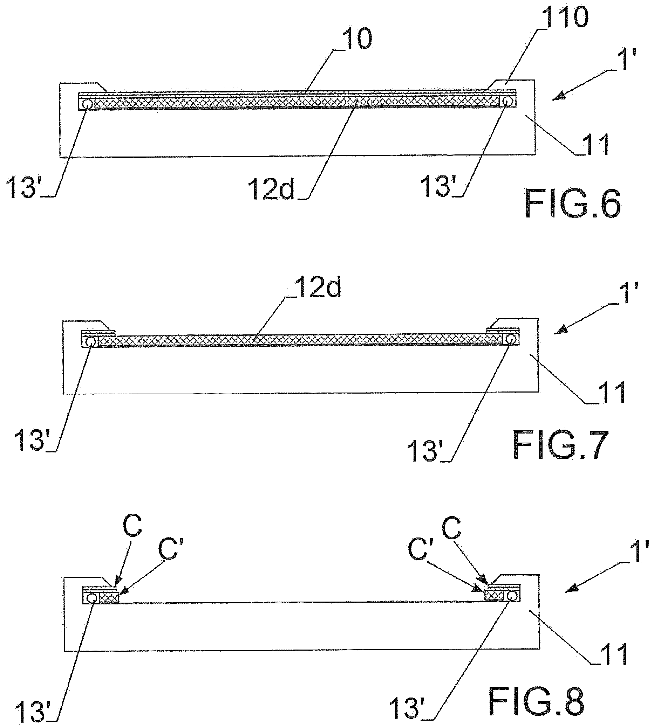

On a représenté de manière schématique en coupe transversale sur la figure 6 un exemple d'écran plat 1' à cristaux liquides, de type écran d'ordinateur. A la différence de l'écran plat 1 précédemment décrit, cet écran plat 1' comporte :
- en face arrière de la dalle LCD 10, une plaque de diffusion 12d en matériau thermoplastique, par exemple en polyméthacrylate de méthyle (PMMA) ; en pratique l'épaisseur de cette plaque 12d peut varier de quelques millimètres au centimètre ;
- des tubes d'éclairage à vapeur de mercure 13' qui sont fixés dans le châssis 11, en étant disposés de part et d'autre de la plaque de diffusion 12d, à proximité immédiate de deux bords opposés de la plaque de diffusion, de telle sorte que la lumière produite par les tubes d'éclairage 13' est diffusée à travers l'épaisseur de la plaque 12d.

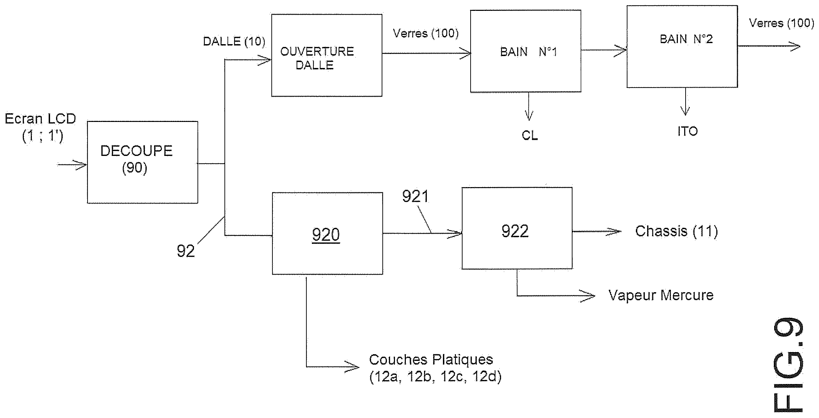

### Procédé de recyclage - synoptique de la figure 9

En référence à la figure 9, pour recycler un écran LCD 1 ou 1' précédemment décrit, on met en oeuvre les étapes principales suivantes.

On commence (90) par découper la dalle 10 à cristaux liquides et les couches plastiques 12a, 12b, 12c, ou 12d tout en préservant l'intégrité des tubes 13 ou 13' à vapeur de mercure. Cette découpe 90 sera détaillée ultérieurement.

En sortie de cette découpe 90, on obtient deux types de composants séparés :
- la partie centrale de la dalle 10 à cristaux liquides qui a été découpée sur toute sa périphérie et qui est de ce fait détachée mécaniquement du châssis11 ;
- le châssis 11 contenant les tubes d'éclairage à vapeur de mercure 13 ou 13' qui sont intacts et les couches plastiques 12a, 12b, 12c ou la couche plastique 12d.

La dalle 10 à cristaux liquides qui a été découpée est recyclée dans une première filière de recyclage 91 pour le traitement des verres 100 afin de retirer les cristaux liquides (CL) et l'oxyde d'indium-étain (ITO).

Le châssis 11 contenant les tubes d'éclairage à vapeur de mercure 13 ou 13' qui sont intacts et les couches plastiques 12a, 12b, 12c ou la couche plastique 12d qui ont été découpés, est recyclé dans une deuxième filière de recyclage 92.

Les filières de recyclage 91 et 92 peuvent être mises en oeuvre sur le même site industriel que l'étape de découpe 90, ou être mises en oeuvre sur des sites industriels différents.

### Découpe 90) de la dalle et des couches plastiques

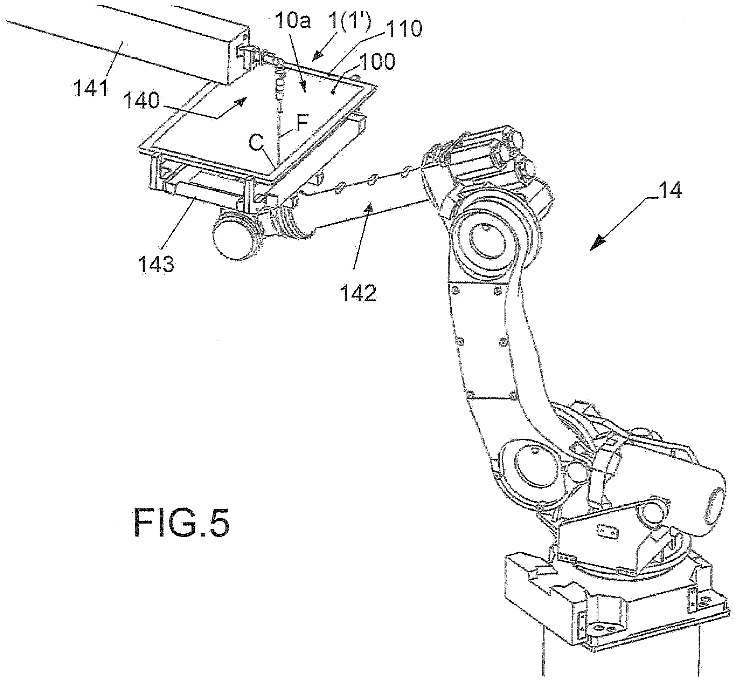

On a représenté sur la figure 5 un exemple d'équipement 14 permettant la découpe laser d'un écran 1 à cristaux liquides. Cet équipement de découpe par laser comporte :
- une tête de découpe par laser 140, qui est fixée à l'extrémité d'un bras fixe 140, et qui permet de générer un faisceau laser de découpe F orienté verticalement et de préférence de puissance réglable.
- Un support d'écran 143 fixé à l'extrémité d'un bras robotisé 142 ayant six degrés de liberté.

La découpe par laser d'un écran 1 à cristaux liquides est réalisée au moyen de cet équipement 14 de la manière suivante.

Un opérateur positionne manuellement et fixe l'écran 1 à cristaux liquides sur le support 143 de l'équipement 14, de telle sorte que la face avant 10a de la dalle LCD 10 est orientée vers le haut (figure 5).

Ensuite, l'opérateur actionne les moyens électroniques de commande (non représentés) de la tête de découpe par laser 140 et du bras robotisé 142 de manière à démarrer une première étape de découpe par laser.

Les moyens électroniques de commande de la tête de découpe par laser 140 et du bras robotisé 142 sont programmés de telle sorte, qu'au cours de cette première étape de découpe, le bras robotisé 142 positionne la face avant 10a de la dalle LCD 10 de l'écran 1 sous la tête de découpe par laser 140, et déplace automatiquement l'écran 1 par rapport au faisceau laser F produit par la tête de découpe 140, de manière à découper par laser la dalle LCD 10 suivant un contour de découpe fermé C (figure 1).

En référence à la figure 1, ce contour de découpe fermé C est réalisé dans la partie centrale de la dalle LCD 10 qui n'est pas enchâssée dans le châssis, et de préférence à proximité du bord périphérique 110 du châssis 11.

La puissance du faisceau laser F et la vitesse de déplacement de l'écran 1 par rapport à ce faisceau laser F sont réglées de telle sorte que seule la dalle LCD 10 est découpée au cours de cette première étape, les films plastiques sous-jacents 12a, 12b 12c n'étant pas découpés par le laser.

Dans une autre variante, la puissance du faisceau laser F et la vitesse de découpe (vitesse de déplacement de l'écran 1 par rapport à ce faisceau laser F) peuvent être réglées de telle sorte que la dalle LCD 10 et les films 12a, 12b les plus proches de la dalle LCD 10 sont découpés au cours de cette première étape, et au moins un 12c des films le plus éloigné de la dalle 10 n'est pas découpé par le faisceau laser.

Quelle que soit la variante susvisée, il en résulte avantageusement que les tubes d'éclairage à vapeur de mercure 13 ne sont pas détruits par le faisceau laser F, et que leur intégrité est préservée.

Il revient à l'homme du métier de régler judicieusement la puissance du faisceau laser F et la vitesse de découpe (vitesse de déplacement de l'écran 1 par rapport à ce faisceau laser F) pour réaliser cette première étape de découpe.

A titre d'exemple indicatif et non limitatif de l'invention, dans un exemple précis de réalisation, pour réaliser la première étape de découpe, la longueur d'onde du faisceau laser F était comprise entre 980nm et11600nm; le diamètre du faisceau laser F à la sortie de la tête de découpe était compris entre environ 0,4mm et 0,7mm ; le waist du faisceau laser F était compris entre environ 11 mm et 15 mm; au cours de la découpe, la distance de découpe, c'est-à-dire la distance verticale entre la face avant 10a de la dalle LCD 10 et la sortie de la tête de découpe 140, était comprise entre environ 185mm et 210 mm ; la puissance du faisceau laser F était comprise entre 300W et 900W ; la vitesse de découpe (vitesse de déplacement de l'écran 1 par rapport au faisceau laser F) était comprise entre 13mm/s et 27mm/s.

En référence à la figure 3, une fois la première étape de découpe par laser réalisée, l'opérateur retire la partie centrale découpée de la dalle LCD 10, et il subsiste uniquement un cadre 101 de dalle 10 de faible largeur L fixé au châssis 11.

La partie centrale de la dalle 10 qui est retirée est envoyée dans la première filière de recyclage (91) précitée.

Une fois la partie centrale de la dalle 10 retirée de l'écran 1, l'opérateur actionne les moyens électroniques de commande de la tête de découpe par laser 140 et du bras robotisé 142, de manière à démarrer une deuxième étape de découpe par laser.

Les moyens électroniques de commande de la tête de découpe par laser 140 et du bras robotisé 142 sont programmés de telle sorte, qu'au cours de cette deuxième étape de découpe, le bras robotisé 142 positionne et déplace automatiquement l'écran 1 par rapport au faisceau laser F produit par la tête de découpe par laser 140, de manière à découper par laser suivant un contour fermé C' (figure 4) le ou les films plastiques 12a, 12b,12c, qui n'ont pas été découpés au cours de la première étape de découpe par laser de la dalle 10, tout en préservant l'intégrité des tubes à vapeur de mercure 13. Ce contour de découpe fermé C' est situé à l'intérieur du premier contour de découpe C de la première étape, et de préférence à proximité de ce premier contour de découpe C.

La puissance du faisceau laser F et la vitesse de découpe (vitesse de déplacement de l'écran 1 par rapport à ce faisceau laser F) sont réglées de telle sorte que l'énergie délivrée par ce faisceau laser est suffisamment forte pour découper les films plastiques 12a, 12b 12c, mais est suffisamment faible pour que le faisceau laser de découpe F ne détruise pas les tubes à vapeur de mercure 13, l'intégrité des tubes à vapeur de mercure 13 étant ainsi avantageusement préservée.

Il revient à l'homme du métier de régler judicieusement la puissance du faisceau laser F et la vitesse de découpe (vitesse de déplacement de l'écran 1 par rapport à ce faisceau laser F) pour réaliser cette deuxième étape de découpe.

En pratique, pour réaliser cette deuxième étape de découpe, la puissance du faisceau laser F et la vitesse de déplacement de l'écran 1 seront réglées, de telle sorte que l'énergie délivrée par le faisceau laser L est inférieure à l'énergie délivrée par le faisceau laser lors de la première étape.

Selon le cas, la vitesse de découpe (vitesse de déplacement de l'écran 1 par rapport à ce faisceau laser F) au cours de la deuxième étape peut par exemple être supérieure à la vitesse de découpe au cours de la première étape, la puissance du faisceau laser n'étant pas modifiée entre les deux étapes de découpe, ou la puissance du faisceau laser F au cours de la deuxième étape peut par exemple être inférieure à la puissance du laser au cours de la première étape, la vitesse de coupe n'étant pas modifiées entre les deux étapes de découpe.

Egalement, dans une autre variante, les deux paramètres (vitesse de coupe et puissance) peuvent être modifiés par rapport à la première étape de découpe pour réaliser la deuxième étape de découpe.

A titre d'exemple indicatif et non limitatif de l'invention, dans un exemple précis de réalisation, pour réaliser la deuxième étape de découpe, la longueur d'onde du faisceau laser F était compris entre 980nm et11600nm; le diamètre du faisceau laser F à la sortie de la tête de découpe était compris entre environ 0,4mm et 0,7mm ; le waist du faisceau laser F était compris entre environ 11 mm et 15mm ; au cours de la découpe, la distance de découpe, c'est-à-dire la distance verticale entre le film 12a et la sortie de la tête de découpe 140, était comprise entre environ 185mm et 210mm ; la puissance du faisceau laser F était comprise entre 490W et 610W ; la vitesse de découpe (vitesse de déplacement de l'écran 1 par rapport au faisceau laser F) était comprise entre 47mm/s et 93mm/s.

En référence à la figure 4, une fois la deuxième étape de découpe par laser réalisée, l'opérateur retire la partie centrale découpée des films 12a, 12, 12c, qui peuvent ainsi être recyclés séparément.

Dans une autre variante de réalisation, la découpe laser des films plastiques 12a,12b,12c pourrait être réalisée en plusieurs étapes de découpes successives.

L'équipement 14 de la figure 5 peut également être utilisé pour réaliser la découpe par laser d'un écran 1' à cristaux liquides du type de celui de la figure 6, de manière comparable à ce qui a été précédemment décrit et en mettant notamment en oeuvre deux étapes de découpe par laser.

La première étape de découpe par laser de la dalle LCD 10 est identique à celle précédemment décrite pour l'écran 1. Une fois la partie centrale de la dalle LCD 10 découpée et retirée (figure 7), on réalise une deuxième étape de découpe par laser de la plaque de diffusion 12d et on retire la partie centrale découpée de la plaque de diffusion 12d (figure 8).

Sachant que dans cette configuration d'écran plat 1', les tubes 13' à vapeur de mercure ne sont pas situés en face arrière de la dalle LCD 10, lors des opérations de découpe par laser, le faisceau laser F ne peut pas atteindre les tubes 13' ; l'intégrité des tubes 13' est donc avantageusement préservée pendant les opérations de découpe par laser.

La puissance du faisceau laser F et la vitesse de découpe (vitesse de déplacement de l'écran 1 par rapport à ce faisceau laser F) sont réglées de telle sorte que l'énergie délivrée par ce faisceau laser est suffisamment forte pour découper la plaque de diffusion 12d. En pratique, l'énergie nécessaire pour découper la plaque de diffusion 12d est supérieure à celle utilisée pour découper les films plastiques précités 12a,12b,12c, ce qui se traduit par la mise en oeuvre d'une vitesse de découpe de la plaque 12d plus lente et/ou une puissance de faisceau laser F plus importante.

A titre d'exemple indicatif et non limitatif de l'invention, dans un exemple précis de réalisation, pour réaliser la deuxième étape de découpe de la plaque de diffusion 12d, la longueur d'onde du faisceau laser F était comprise entre 980nm et 10600nm ; le diamètre du faisceau laser F à la sortie de la tête de découpe était compris entre environ 0,4mm et 0,7mm ; le waist du faisceau laser F était compris entre environ 11 mm et 15mm ; au cours de la découpe, la distance de découpe, c'est-à-dire la distance verticale entre la face avant de la plaque 12d et la sortie de la tête de découpe 140, était comprise entre environ 185mm à 210mm ; la puissance du faisceau laser F était comprise entre 490W et610W; la vitesse de découpe (vitesse de déplacement de l'écran 1 par rapport au faisceau laser F) était comprise entre 13mm/s et 27mm/s.

L'invention n'est pas limitée à l'utilisation d'un équipement avec bras robotisé, tel que celui de la figure 5, pour la mise en oeuvre des opérations de découpe par laser d'un écran plat LCD 1 ou 1'. Par exemple, dans une autre variante de réalisation, les deux étapes de découpe par laser d'un écran plat LCD 1 ou 1' peuvent être réalisées en positionnant à plat et en immobilisant l'écran LCD 1 ou 1' sur un support, tel que par exemple un convoyeur à rouleaux, puis en déplaçant une tête de découpe par laser mobile par rapport à l'écran 1 ou 1' de manière à réaliser les étapes successives de découpe par laser précédemment décrites.

Dans une autre variante de réalisation, la découpe de la dalle LCD 10 et des couches plastiques 12a, 12b, 12c ou 12d peut également être réalisée mécaniquement en utilisant une scie de découpe ou tout autre moyen de découpe mécanique équivalent.

Dans une autre variante de réalisation de l'invention, l'ensemble du procédé de découpe peut être entièrement automatisé. Dans ce cas, les écrans plats à cristaux liquides sont par exemple placés par un opérateur sur un tapis de convoyeur et un robot les prend successivement sur ce tapis et les positionne successivement sous la tête de découpe par laser. Une phase de mesure par caméra permettant de mesurer automatiquement les dimensions de l'écran et de déterminer automatiquement le contour de découpe du le laser peut également être mise en oeuvre.
Filière de recyclage (91) de la dalle Dans la première filière de recyclage 91 précitée, on commence (910) par ouvrir la dalle en deux en séparant les deux verres 100 l'un de l'autre. Cette séparation est aisée car la dalle a été précédemment découpée sur toute sa périphérie suivant un contour fermé. Pour effectuer cette ouverture en deux de la dalle 10, on applique par exemple deux ventouses sur les faces externes des verres 100 de la dalle 10, et on exerce une traction sur au moins une des deux ventouses de manière à écarter et séparer les deux verres 100 l'un de l'autre. A l'issue de cette étape 910 de séparation, chaque verre 100 comporte sur sa face interne une première couche en contact avec la face interne du verre 100 et contenant de l'oxyde d'indium-étain (ITO), et une deuxième couche sus-jacente en contact avec la première couche et contenant des cristaux liquides (CL).

Chaque verre 100 est ensuite soumis aux deux trainements chimiques successifs suivants.

Chaque verre 100 est immergé dans un premier bain de lavage 911 contenant un premier liquide de lavage, de manière à mettre en contact ledit premier liquide de lavage avec au moins la face interne du verre 100 et permettre la solubilisation des cristaux liquides (CL). Ce premier liquide de lavage permettant la solubilisation des cristaux liquides (CL) est par exemple une solution contenant un solvant organique, tel que de l'acétone. Cette solution chimique peut être remplacée par tout liquide permettant une solubilisation des cristaux liquides, et notamment par tout liquide contenant un solvant organique permettant la solubilisation de cristaux liquides (CL).

Chaque verre 100 est ensuite immergé dans un deuxième bain de lavage 912 contenant un deuxième liquide, de manière à mettre en contact ledit deuxième liquide avec au moins la face interne du verre 100, et permettre une attaque chimique de la couche d'oxyde d'indium-étain (ITO) par ce deuxième liquide. Ce deuxième liquide permettant l'attaque de la couche d'oxyde d'indium-étain (ITO) est par exemple une solution acide, et plus particulièrement une solution contenant de l'acide nitrique. Cette solution d'acide nitrique peut être remplacée par toute solution acide permettant une attaque de la couche d'oxyde d'indium-étain (ITO).

De préférence, pour activer la dissolution dans le premier bain 911 et pour activer l'attaque chimique dans le deuxième bain 912, lesdits bains 911, 912 sont soumis à des vibrations ultrasonores basses fréquences, et par exemple à une fréquence de l'ordre de 30kHZ. A cet effet, chaque cuve contenant le premier liquide de lavage ou le deuxième liquide est équipée, par exemple dans le fond de la cuve, de transducteurs ultrasonores.

Les cristaux liquides(CL) en solution dans le premier bain 911 peuvent ensuite être récupérés par distillation et séchage.

Les oxydes d'indium-étain (ITO) dans le deuxième bain 912 peuvent ensuite être récupérés en mettant en oeuvre un procédé de précipitation par variation de pH.

Les verres 100, après trempages successifs dans les deux bains 911 et 912, peuvent ensuite être envoyés dans une filière de récupération et valorisation du verre.

Dans le cadre de l'invention, la récupération des cristaux liquides (CL) par solubilisation peut également être effectuée dans plusieurs bains de lavage successifs, qui sont de préférence soumis à des vibrations ultrasonores basses fréquences. Egalement, la récupération de l'ITO par solubilisation peut également être effectuée dans plusieurs bains de lavage successifs, qui sont de préférence soumis à des vibrations ultrasonores basses fréquences.

### Filière de recyclage (92) du châssis 11 et des tubes d'éclairage 13 ou 13'

Les couches plastiques 12a, 12b, 12c ou la couche plastique 12d qui on été préalablement découpées, sont retirées (920) manuellement du châssis 11, et sont envoyées dans une filière classique de recyclage des plastiques, en vue de leur valorisation et réutilisation des matériaux plastiques les constituant.

Une fois les couches plastiques 12a, 12b, 12c ou la couche plastique 12d retirées, le châssis 11, contenant les tubes d'éclairage à vapeur de mercure 13 ou 13', est envoyé (921) dans une station de recyclage spécifique 922.

Dans cette station de recyclage spécifique 922, on positionne le châssis 11 contenant les tubes d'éclairage 13 ou 13' dans une enceinte qui est hermétique et mise en dépression de manière à confiner les vapeurs de mercure nocives, et à l'intérieur de cette enceinte, on détruit in situ les tubes d'éclairage 13 ou 13' en les brisant par tout moyen mécanique et on retire les culots des tubes d'éclairage 13 ou 13'. Les vapeurs de mercure sont aspirées en dehors de l'enceinte au moyen d'un système d'aspiration des vapeurs et de captation du mercure sur charbons actifs.

Une fois les tubes d'éclairage 13 ou 13' brisés et les vapeurs de mercure évacuées, le châssis 11 ne contient plus de vapeurs de mercure nocives et peut être retiré de l'enceinte en vue d'un recyclage classique de ses différents composants restants.

L'invention n'est pas limitée au recyclage d'écrans plats LCD comportant des tubes d'éclairage à vapeur de mercure comme moyen d'éclairage de la dalle à cristaux liquides, mais s'étend à tout type d'écrans plats à cristaux liquides, quel que soit le type de moyen d'éclairage de la dalle à cristaux liquides, et s'étend notamment au recyclage d'écrans plats LCD-LED dans lesquels la dalle à cristaux liquides est éclairée au moyen de diodes électroluminescentes.

Dans le cas du recyclable d'écrans plats LCD-LED, une fois la dalle à cristaux liquides et les plastiques retirés, le reste de l'écran est directement broyé.

## Revendications

1. Procédé de recyclage d'un écran plat (1 ; 1') à cristaux liquides comportant une dalle (10) à cristaux liquides qui est enchâssée dans un châssis (11), et qui comprend deux verres (100) comportant chacun sur leur face interne de l'oxyde d'indium-étain (ITO), et des cristaux liquides entre les deux verres, au cours duquel on réalise une découpe (90) de la dalle (10) à cristaux liquides puis on recycle la dalle (10) à cristaux liquides, qui a été découpée, dans une première filière de recyclage (91), dans laquelle on ouvre (910) la dalle en deux en séparant les deux verres, puis dans un premier temps on lave au moins la face interne de chaque verre (100) avec un premier liquide permettant la solubilisation des cristaux liquides **caractérisé en ce que** dans un deuxième temps, on lave au moins la face interne de chaque verre (100) avec un deuxième liquide permettant une attaque chimique de l'oxyde d'indium-étain.

2. Procédé selon la revendication 1, dans lequel le lavage des verres (100) est réalisé en trempant chaque verre (100) successivement dans au moins deux bains: au moins un premier bain (911) contenant le premier liquide, et au moins un deuxième bain (912) contenant le deuxième liquide.

3. Procédé selon la revendication 2, dans lequel le premier bain (911) et/ou le deuxième bain (912) est mis en vibration par des ultrasons.

4. Procédé selon l'une quelconque des revendications 1 à 3, dans lequel le premier liquide contient un solvant organique ou de l'alcool.

5. Procédé selon la revendication 4, dans lequel le premier liquide contient de l'acétone.

6. Procédé selon l'une quelconque des revendications 1 à 5, dans lequel le deuxième liquide est une solution acide.

7. Procédé selon la revendication 6, dans lequel le deuxième liquide contient de l'acide nitrique.

8. Procédé selon l'une quelconque des revendications 1 à 7, dans lequel la découpe de la dalle (10) à cristaux liquides est effectuée au moyen d'un laser.

9. Procédé selon l'une quelconque des revendications 1 à 8, dans lequel la découpe (90) de la dalle (10) à cristaux liquides est réalisée suivant un contour de découpe fermé (C) réalisé dans la partie centrale de la dalle (10) qui n'est pas couverte par le châssis (11).

10. Procédé selon l'une quelconque des revendications 1 à 9, dans lequel l'écran plat (1 ; 1') à cristaux liquides comporte des tubes d'éclairage (13 ; 13') à vapeur de mercure, et la découpe (90) de la dalle (10) à cristaux liquides est réalisée en préservant l'intégrité des tubes (13 ; 13') à vapeur de mercure.

11. Procédé selon la revendication 10, dans lequel l'écran plat à cristaux liquides comportant en outre une ou plusieurs couches (12a ; 12b ; 12c ; 12d) de matériau plastique positionnées entre la face arrière de la dalle (10b) et le châssis (11), pour réaliser la découpe (90), on positionne la face avant (10a) de la dalle (10) à cristaux liquides de l'écran plat sous une tête de découpe par laser (140), on réalise une première étape de découpe de la dalle (10) au moyen d'un faisceau laser (F) suivant un contour de découpe fermé (C) réalisé dans la partie centrale de la dalle (10) qui n'est pas couverte par le châssis (11), et de telle sorte qu'au moins une des couches de matériau plastique n'est pas découpée par le laser, puis on retire la partie centrale découpée de la dalle (10) à cristaux liquides.

12. Procédé selon la revendication 11, **caractérisé en ce qu'**une fois la partie centrale de la dalle (10) à cristaux liquides retirée, on réalise une deuxième étape de découpe, au moyen d'un faisceau laser (F), de la ou des couches de matériau plastique, qui n'ont pas été découpées au cours de la première étape de découpe par laser de la dalle, tout en préservant l'intégrité des tubes (13 ; 13') à vapeur de mercure.

13. Procédé selon l'une quelconque des revendications 11 ou 12, dans lequel l'énergie délivrée par le faisceau laser de découpe (F) au cours de la deuxième étape de découpe est inférieure à l'énergie délivrée par le faisceau laser de découpe (F) au cours de la première étape de découpe.

14. Procédé selon l'une quelconque des revendications 11 à 13, dans lequel les tubes (13) à vapeur de mercure sont positionnés en face arrière de la dalle (10).

15. Procédé selon la revendication 14, dans lequel l'écran (1) comporte un ou plusieurs films plastiques (12a, 12b, 12c) superposés en guise de couches de matériau plastique.

16. Procédé selon l'une quelconque des revendications 11 à 13, dans lequel l'écran (1') comporte une plaque de diffusion (12d) en guise de couche de matériau plastique, et les tubes (13') à vapeur de mercure sont positionnés de part et d'autre de la plaque de diffusion (12d), à proximité immédiate de deux bords opposés de la plaque de diffusion (12d).

## Patentansprüche

1. Recycling-Verfahren für Flüssigkristallflachbildschirme (1; 1') mit einer Flüssigkristallplatte (10), die in einem Rahmen (11) aufgenommen ist und die zwei Gläser bzw. Glasplatten (100) aufweist, die jeweils auf ihrer Innenoberfläche Indiumzinnoxid (ITO) aufweisen, sowie mit Flüssigkristallen zwischen den zwei Glasplatten, wobei ein Schneiden (90) der Flüssigkristallplatte (10) durchführt wird und dann die geschnittene Flüssigkristallplatte (10) in einem ersten Recycling-Prozess (91) recycelt wird, bei dem man die Platte in zwei Teile öffnet (910), indem man die zwei Platten trennt, man dann in einem ersten Abschnitt zumindest die Innenoberfläche jede Glasplatte (100) mit einer ersten Flüssigkeit wäscht, die ein Lösen der Flüssigkristalle erlaubt, **dadurch gekennzeichnet, dass** man in einem zweiten Abschnitt zumindest die Innenoberfläche jeder Glasplatte (100) mit einer zweiten Flüssigkeit wäscht, die einen chemischen Angriff auf das Indiumzinnoxid erlaubt.

2. Verfahren nach Anspruch 1, worin das Waschen der Glasplatten (100) bewerkstelligt wird, indem man jede Glasplatte (100) nacheinander in mindestens zwei Bäder taucht: mindestens ein erstes Bad (911), welches die erste Flüssigkeit enthält, und mindestens ein zweites Bad (912), welches die zweite Flüssigkeit enthält.

3. Verfahren nach Anspruch 2, worin das erste Bad (911) und/oder das zweite Bad (912) mittels Ultraschall in Schwingung versetzt wird/werden.

4. Verfahren nach einem der Ansprüche 1 bis 3, worin die erste Flüssigkeit ein organisches Lösungsmittel oder Alkohol enthält.

5. Verfahren nach Anspruch 4, worin die erste Flüssigkeit Aceton enthält.

6. Verfahren nach einem der Ansprüche 1 bis 5, worin die zweite Flüssigkeit eine saure Lösung ist.

7. Verfahren nach Anspruch 6, worin die zweite Flüssigkeit Salpetersäure enthält.

8. Verfahren nach einem der Ansprüche 1 bis 7, worin das Schneiden der Flüssigkristallplatte (10) mittels eines Lasers bewerkstelligt wird.

9. Verfahren nach einem der Ansprüche 1 bis 8, worin das Schneiden (90) der Flüssigkristallplatte (10) bewerkstelligt wird, indem man einer geschlossenen Schnittkontur (C) folgt, welcher in dem zentralen Bereich der Platte (10) vorgesehen ist und nicht von dem Rahmen (11) bedeckt ist.

10. Verfahren nach einem der Ansprüche 1 bis 9, worin der Flüssigkristallflachbildschirm (1; 1') Quecksilberdampf-Leuchtröhrchen (13; 13') aufweist und das Schneiden (90) der Flüssigkristallplatte (10) bewerkstelligt wird, indem die Quecksilberdampfröhrchen (13; 13') unversehrt bleiben.

11. Verfahren nach Anspruch 10, worin der Flüssigkristallflachbildschirm weiterhin ein oder mehrere Schichten (12a; 12b; 12c; 12d) aus Kunststoffmaterial zwischen der Rückseite der Platte (10b) und dem Rahmen (11) aufweist, und man zum Schneiden (90) die Vorderseite (10a) der Flüssigkristallplatte (10) des Flachbildschirms unter einem Laserschneidkopf (140) anordnet, man eine erste Stufe des Schneidens der Platte (10) mittels eines Laserstrahls (F) bewerkstelligt, wobei einer geschlossenen Schnittkontur (C) in dem zentralen Bereich der Platte (10) folgt, der nicht von dem Rahmen (11) bedeckt ist, und derart, dass mindestens eine der Platten aus Kunststoffmaterial nicht von dem Laser geschnitten wird, und man dann den zentralen Bereich, der aus der Flüssigkristallplatte (10) herausgeschnitten wurde, wegzieht.

12. Verfahren nach Anspruch 11, **dadurch gekennzeichnet, dass** wenn der zentrale Bereich der Flüssigkristallplatte (10) weggezogen worden ist, ein zweiter Schneideschritt mittels eines Laserstrahls (F) der Kunststoffmaterialplatte(n) durchgeführt wird, die im ersten Laserschneideschnitt der Platte nicht geschnitten worden waren, wobei die Quecksilberröhrchen (13; 13') unversehrt bleiben.

13. Verfahren nach einem der Ansprüche 11 oder 12, worin die während des zweiten Schneideschritts von dem Laserschneidestrahl (F) abgegebene Energie kleiner als die Energie ist, die von dem Laserschneidestrahl (F) während des ersten Schneideschritts abgegeben wurde.

14. Verfahren nach einem der Ansprüche 11 bis 13, worin sich die Quecksilberdampfröhrchen (13) an der Rückseite der Platte (10) befinden.

15. Verfahren nach Anspruch 14, worin der Bildschirm (1) ein oder mehrere Kunststofffolien (12a; 12b; 12c) aufweist, die als Kunststoffmaterialschichten aufgeschichtet sind.

16. Verfahren nach einem der Ansprüche 11 bis 13, worin der der Bildschirm (1') eine lichtstreuende Platte (12d) als die Kunststoffmaterialschicht aufweist und sich die Quecksilberdampfröhrchen (13') an beiden Seiten der lichtstreuenden Platte (12d) in unmittelbarer Nähe der zwei gegenüberliegenden Ränder der lichtstreuenden Platte (12d) befinden.

## Claims

1. Process for recycling a liquid crystal flat screen (1; 1') comprising a liquid crystal display (10) which is set in a frame (11), and which comprises two glass panels (100) each comprising on their inner face indium tin oxide (ITO), and liquid crystals between the two glass panels, during which a cutting out (90) of the liquid crystal display (10) is carried out then the liquid crystal display (10), which has been cut out, is recycled in a first recycling system (91), in which the display is split (910) in two by separating the two glass panels then, firstly, at least the inner face of each glass panel (100) is washed with a first liquid that enables the dissolution of the liquid crystals, **characterized in that**, secondly, at least the inner face of each glass panel (100) is washed with a second liquid that enables chemical etching of the indium tin oxide.

2. Process according to Claim 1, in which the washing of the glass panels (100) is carried out by dipping each glass panel (100) successively into at least two baths: at least one first bath (911) containing the first liquid, and at least one second bath (912) containing the second liquid.

3. Process according to Claim 2, in which the first bath (911) and/or the second bath (912) is vibrated by ultrasonic waves.

4. Process according to any one of Claims 1 to 3, in which the first liquid contains an organic solvent or alcohol.

5. Process according to Claim 4, in which the first liquid contains acetone.

6. Process according to any one of Claims 1 to 5, in which the second liquid is an acid solution.

7. Process according to Claim 6, in which the second liquid contains nitric acid.

8. Process according to any one of Claims 1 to 7, in which the cutting out of the liquid crystal display (10) is carried out using a laser.

9. Process according to any one of Claims 1 to 8, in which the cutting out (90) of the liquid crystal display (10) is carried out following a closed cutting contour (C) created in the central part of the display (10) that is not covered by the frame (11).

10. Process according to any one of Claims 1 to 9, in which the liquid crystal flat screen (1; 1') comprises mercury vapour lighting tubes (13; 13'), and the cutting out (90) of the liquid crystal display (10) is carried out while preserving the integrity of the mercury vapour tubes (13; 13').

11. Process according to Claim 10, in which, the liquid crystal flat screen additionally comprising one or more layers (12a; 12b; 12c; 12d) of plastic material positioned between the rear face of the display (10b) and the frame (11), in order to carry out the cutting out (90), the front face (10a) of the liquid crystal display (10) of the flat screen is positioned under a laser cutting head (140), a first step of cutting out the display (10) is carried out using a laser beam (F) following a closed cutting contour (C) created in the central part of the display (10) that is not covered by the frame (11), and in such a way that at least one of the layers of plastic material is not cut out by the laser, then the cut-out central part of the liquid crystal display (10) is removed.

12. Process according to Claim 11, **characterized in that**, once the central part of the liquid crystal display (10) has been removed, a second step of cutting out, by means of a laser beam (F), the layer (s) of plastic material that were not cut out during the first step of laser cutting of the display is carried out, while at the same time preserving the integrity of the mercury vapour tubes (13; 13').

13. Process according to either one of Claims 11 and 12, in which the energy delivered by the laser cutting beam (F) during the second cutting step is less than the energy delivered by the laser cutting beam (F) during the first cutting step.

14. Process according to any one of Claims 11 to 13, in which the mercury vapour tubes (13) are positioned on the rear face of the display (10).

15. Process according to Claim 14, in which the screen (1) comprises one or more superposed plastic films (12a, 12b, 12c) as layers of plastic material.

16. Process according to any one of Claims 11 to 13, in which the screen (1') comprises a diffuser plate (12d) as layer of plastic material, and the mercury vapour tubes (13') are positioned on either side of the diffuser plate (12d), in the immediate vicinity of two opposite edges of the diffuser plate (12d).
